# EUROPEAN PATENT SPECIFICATION

(11) **EP 1 524 781 B1**
(45) Date of publication and mention of the grant of the patent: **26.11.2008**
(21) Application number: 03292571.1
(22) Date of filing: 15.10.2003
(51) Int. Cl.: H04B 10/08

(54) **Optical link performance monitoring using OTDM with laser for data transmission/reception**
Leistungsüberwachung einer optischen Übertragungsstrecke durch OTDM mit Laser für Datenübertragung/-empfang
Surveillance de performance d'une liaison optique par OTDM avec un laser pour transmission/réception de données

(43) Date of publication of application: 20.04.2005
(73) Proprietor: Alcatel Lucent, 75008 Paris (FR)
(72) Inventor: Pfeiffer, Thomas, Dr., 70569 Stuttgart (DE); Schmuck, Harald, 71701 Schwieberdingen (DE)
(74) Representative: Schmidt, Werner Karl

(56) References cited:
- EP-A- 0 772 265
- WO-A-94/16347
- US-A- 5 907 417
- US-B1- 6 549 310

## Description

The present invention relates to optical communications systems, and more particularly, to performance monitoring in an optical network.

Optical fiber transmission systems are very widespread today and support very high speed audio and video transmissions. Due to the increased data traffic volumes that shall be supported, performance monitoring and management of networks become increasingly important. The need for reliable tools that are capable of detecting faults and deterioration of the physical carrier, i.e. of the optical fiber, is increasingly felt. During implementation of fiber plants as well as afterwards during the network operation it will be necessary to apply a method to check the optical line condition, since a quick detection and identification of fiber link failures can help to minimize service downtime for the user and any loss of revenue to the network provider.

In general, for the monitoring of optical link performance (e.g. fiber breaks, failure identification, link loss, degradation effects...), the most common technical solutions employ an optical reflectometer equipment implementing OTDR (Optical Time Domain Reflectometry) measurement technology. These measurements can be done on demand (in case of degrading link performance in terms of e.g. increasing Bit Error Rate) or in parallel to an operating network at a special dedicated wavelength (WDM technique). The system pumps a light signal pulse at a different wavelength from that used for signal transmission so that it can be easily filtered before the reception apparatus without interfering with transmission. The light pulse pumped by the reflectometer laser is backscattered on the fiber and returns to the instrument which uses it to trace the optical power of the line according to distance. The smallest line attenuation can be detected by periodically repeating the test on the fiber and comparing the current and the previously recorded reference traces.

Off-the-shelf systems of this kind are typically designed to work in long-haul networks and are used to test one optical fiber line at a time by means of one or more, usually expensive, optical switching devices. Furthermore, testing each fiber would obviously increase cost both in terms of passive elements needed to pump optical signals at testing wavelength into each optical fiber (WDM, optical filters, switch ports, etc.) necessary to satisfy all requirements which are needed in different fiber network topologies.

An improved system and method for providing optical time domain reflectometry is described in WO 94/16347 and US 4,911,515. In said patents, which are considered the closest state of the art, a system performs OTDR measurements on a plurality of optical fibers using the existing system optical line cards, for transmission and reception of system data, as the optical front end for the OTDR system. The system comprises an electronic crossbar 1xN switch which allows the signal processor in charge of the OTDR signal generation and measurements to access each optical line card and thus test each fiber individually.

While this technique significantly reduces the cost of the entire system it still needs for switching means at the central location system for selectively connecting the monitoring means to an optical line card receiver.

In US 6,549,310 B1 an optic transmitter system with built-in optical link diagnostic means is disclosed. The transmitter system described though does not have an optical receiver and an optical coupler for redirecting the OTDR signals.

EP 0 772 265 A1 describes an optical communication line inspection system. The inspection system comprises an OTDR apparatus, consisting of an inspection section, a light-emitting section, and an optical coupler, to which said sections are connected. The inspection system further comprises an optical switch to optically connect the OTDR apparatus to optical communication lines via further optical couplers.

It is the object of the invention to solve the aforesaid technical problems and provide a low-cost optical link performance monitoring system and method showing similar features as conventional OTDR equipment.

The object is achieved according to the invention by a method for monitoring the optical link performance of a plurality of optical fibers according to claim 1.

It is also achieved by
an optical fiber communications transceiver module according to claim 2.

Advantageous configurations of the invention emerge from the dependent claims, the following description and the drawings. For example, it is seen advantageous that the invention can be technically realized by compact, pluggable, low-cost optical transceiver modules. It is also a method for detecting degradations and failures in an optical network and for isolating the cause of the degradations and/or failures, via an automated process, with reduced relative cost, with greater accuracy of error detection, and while minimizing the number of electrical monitoring points.

Examples of the invention are now explained with the aid of Figures 1 to 3.

Fig. 1 shows a block diagram of an exemplary optical transmission system which provides optical performance monitoring using a plurality of optical transceiver modules according to the invention.

Fig. 2A,B shows two block diagrams which represent a detailed possible implementation of the optical transceiver module according to the invention.

Fig. 3 shows a block diagram of another possible implementation of the optical transceiver module according to the invention.

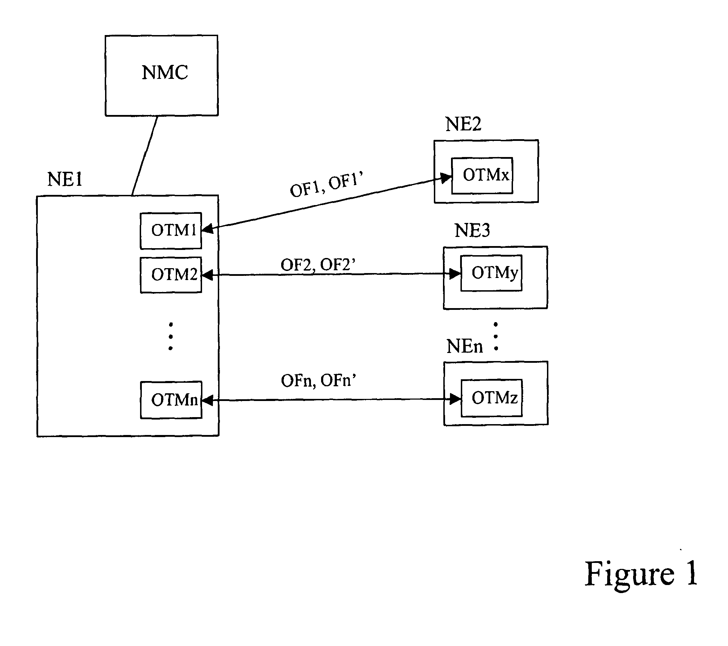

Figure 1 shows a block diagram of an optical transmission system comprising a plurality of optical network nodes NE1 to NEn, each including at least one optical transceiver module OTM1 to OTMz according to the invention which are used for optical data transmission and reception through optical fiber link pairs OF1,OF1' to OFn,OFn'. The network elements NE1 to NEn also have a connection with a network management controller NMC.

The optical network nodes NE can be for example state of the art Ethernet or IP switches with optical interfaces or also optical network units (ONUs) of a passive optical network (PON). According to the invention, performance measurements are automatically performed and remotely controlled by the same transceiver module OTM which is used for optical data transmission. Also according to the invention, the transceiver module OTM will be able to exchange information with the network element NE in order to receive control information, e.g. for configuration or initialization steps, and to send information relative to the performance measurements carried out. This information can be used by the NE to send or receive alarm information, configuration status/information or monitoring status to and from a network management controller NMC in charge of managing the optical communications network. Although in the figure only one network element NE1 is connected to a network management controller NMC, it is understood that each network element NE1 to NEn shall have a connection to its network management controller NMC.

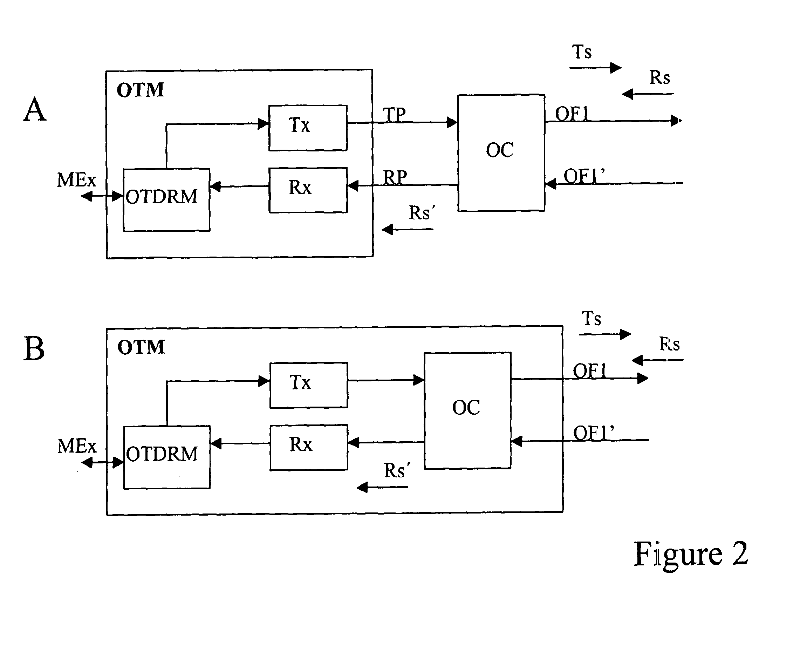

Figure 2A shows a diagram example of an optical transceiver module OTM according to the invention comprising Optical Time Domain Reflectometry measurement means OTDRM having a monitoring exchange link MEx and being connected to an optical transmitter Tx and receiver Rx having output and input ports TP and RP respectively. An optical coupler OC is connected between the optical link pair OF1, OF1' and the transceiver module OTM.

Applying simple low frequency electronics at the transceiver modules OTM, convenient optical signals, for example a pulse width of 200 ns, repetition period of 100 microsec for 10 km fiber link and 20 meter fiber resolution, are generated by the Optical Time Domain Reflectometry measurement means OTDRM, sent to the transmitting means Tx and transmitted through output port TP. The signal passes trough the optical coupler OC and reaches the fiber link OF1. Once the transmitted signal Ts travels along the fiber link OF1, a reflected light Rs (e.g. from a fiber break or Rayleigh backscattered light) may be transmitted back and fed to the transceiver module receiver Rx by means of a bi-directional optical coupler OC, and further to the Optical Time Domain Reflectometry measurement means OTDRM where it is detected and analyzed. We see then, that according to the invention, the monitoring measurements are performed by the same transmitter that is used for data transmission (operation at the same wavelength). Said Optical Time Domain Reflectometry measurement means OTDRM can, through monitoring link exchange MEx connection, which can be an electronic interface, exchange information with the network element NE relating to configuration, initialization, status, etc...

The optical coupler OC can be made from two standard fiber couplers showing asymmetrical power coupling ratios assembled in the fiber link pair OF1, OF1'. These couplers are combined at their tap ports to enable an asymmetric power coupling of the back scattered signal Rs to the receiver Rx. The chosen asymmetry sets the attenuation of the data signal sent through the fiber link OF1 and the monitored signal Rs' received at the receiver means input port RP, for example a 1:10 coupling ratio leads to about 0.5 dB attenuation for the data transmitted and more than 20 dB for the reflection, respectively. The magnitude of the coupling ratio deployed in the system can be optimized in dependence on the available point-to-point optical link budget. Therefore, e.g. 1: 3 couplers can be selected in order to decrease the attenuation of the Optical Time Domain Reflectometry measurement paths at the expense of the data path.

The performance monitoring measurements can be carried out during intentional service interruptions and can be started at arbitrary instants in time, depending on priority, service provider, or network requirements; or said measurements can be carried out during normal data transmission either by using the transmitted data for OTDR measurements or by sending the OTDR signals by means of a subcarrier modulation.

The optical couplers OC can be simple well known bi-directional optical fiber tap coupler components or, alternatively, dielectric mirrors or prisms combined, if necessary, with imaging optics (e.g. GRIN lenses), which can be easily packaged into a small optical module or other known state of the art components used for such purpose. It is possible to implement optical connectors comprising said optical coupler OC and connect them at the transceiver module OTM optical input RP and output ports TP. The optical connectors are pluggable devices and therefore they can easily be connected, exchanged or removed on demand. It is also possible that these connectors are integrated on a patch-panel optical fiber connection equipment between two optical network nodes NE.

Figure 2B shows an alternative block diagram implementation of the optical transceiver module OTM where, instead of a separate optical device as shown in previous figure, the optical coupler OC is integrated into the transceiver module OTM housing.

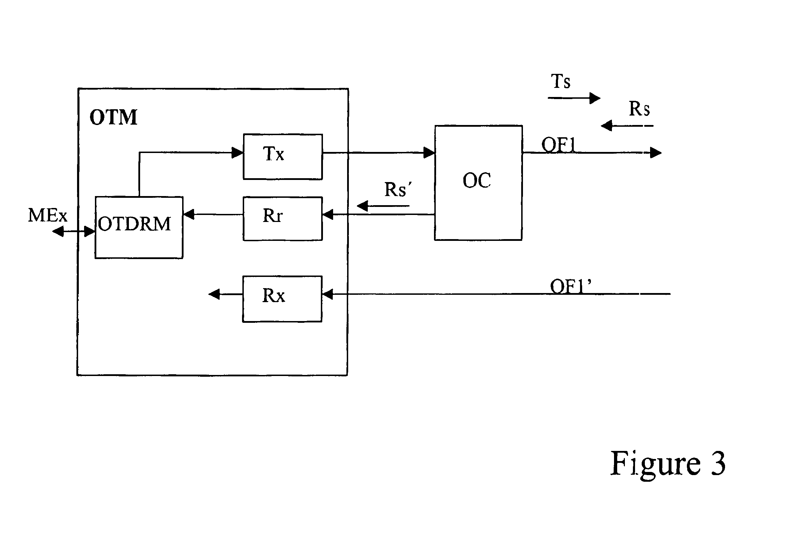

Fig. 3 shows a block diagram of still another possible implementation of the optical transceiver module OTM, where it comprises an additional receiver Rr for the reflected light Rs'.

This additional receiver Rr provides a reduction of the number of components and complexity of the optical module, a decrease of reflected path attenuation and acts as a fall-back solution in case that the receiver means Rx does not allow for the reception of weak low frequency signals.

Again, although not shown, the optical transceiver module OTM of Figure 3 can be also implemented with the optical coupler OC integrated into it.

The above proposals can in principle as well be adapted to single fiber connections that eventually apply WDM techniques for separating the upstream from the downstream signals on the fiber link. On these links so-called bi-directional transceivers modules are used that incorporate a WDM directional coupler (e.g. 1300/1550 nm) to connect the transmission fiber to the transmitter laser and to the receiver photodiode, respectively. Here an intentional leakage of the backreflected transmitter wavelength into the receiver arm of the transceiver module will provide for the desired optical monitoring signal on the photodiode.

## Claims

1. A method for monitoring the optical link performance of a plurality of optical fibers (OF1, OF2, OFn) each connected at least to a transceiver module (OTM1, OTM2, OTMn) comprising a transmitter (Tx) and a receiver (Rx), the method comprising: generating and transmitting an Optical Time Domain Reflectometry signal (Ts) through said optical fibers (OF1, OF2, OFn) and receiving and monitoring a reflection signal (Rs') of said transmitted signal, said reflection signal being redirected via an optical coupler (OC) connected to the transceiver module **characterized in that** Optical Time Domain Reflectometry measurement means (OTDR) for signal generation and monitoring measurements are coupled to the transmitter and said receiver and located within each of the transceiver modules (OTM1, OTM2, OTMn) used for data transmission/reception and the optical coupler (OC) redirects a part of the reflection signal to a separate low frequency receiver (Rr), wherein the separate low frequency receiver receives a part of the reflection signal, wherein the Optical Time Domain Reflectometry signal (Ts) is a low frequency signal, wherein the transmitter transmits said Optical Time Domain Reflectometry signal at wavelength of data transmission.

2. An optical fiber communications transceiver module (OTM) comprising a transmitter (Tx) and a receiver (Rx) for data transmission and reception, **characterized in that** it further comprises internal Optical Time Domain Reflectometry measurement means (OTDRM) and optical coupler (OC) and an additional receiver (Rr) adapted for low frequency signal reception, the transmitter (Tx) and the additional receiver being connected to the optical coupler, wherein the separate low frequency receiver is adapted for receiving a part of the reflection signal, wherein the Optical Time Domain Reflectometry signal (Ts) is a low frequency signal, wherein the transmitter is adapted for transmitting the Optical Time Domain Reflectometry signal at wavelength of data transmission.

3. An optical fiber communications network element (NE) comprising at least one transceiver module (OTM) according to claim 2.

## Patentansprüche

1. Ein Verfahren zur Überwachung der Leistung optischer Übertragungsstrecken mit einer Vielzahl von optischen Fasern (OF1, OF2, OFn), welche jeweils mindestens an ein Transceiver-Modul (OTM1, OTM2, OTMn) mit einem Sender (Tx) und einem Empfänger (Rx) angeschlossen sind, wobei das Verfahren umfasst:
Erzeugen und Senden eines optischen Zeitbereichsreflektometrie-Signals (Ts) durch die besagten optischen Fasern (OF1, OF2, OFn) und Empfangen und Überwachen eines Reflektionssignals (Rs') des besagten gesendeten Signals, wobei das Reflektionssignal über einen optischen Koppler (OC), welcher an das Transceiver-Modul angeschlossen ist, weitergeleitet wird, **dadurch gekennzeichnet, dass** optische Zeltbereichsreflektometrie-Messmittel (OTDR) zur Signalerzeugung und Überwachung der Messungen an den Sender und den besagten Empfänger gekoppelt und innerhalb eines jeden der für die Datenübertragung und den Empfang von Daten benutzten Transceiver-Module (OTM1, OTM2, OTMn) angeordnet sind, und der optische Koppler (OC) einen Teil des Reflektionssignals an einen separaten Niederfrequenzempfänger (Rr) weiterleitet, wobei der separate Niederfrequenzempfänger einen Teil des Reflektionssignals empfängt, wobei das optische Zeitbereichsreflektometrie-Signal (Ts) ein Niederfrequenzsignal ist, wobei der Sender das besagte optische Zeitbereichsreflektometrie-Signal bei Datenübertragungswellenlänge empfängt.

2. Ein faseroptisches Kommunikations-Transceiver-Modul (OTM), umfassend einen Sender (Tx) und einen Empfänger (Rx) für die Übertragung und den Empfang von Daten, **dadurch gekennzeichnet, dass** es weiterhin interne optische Zeitbereichsreflektometrie-Messmittel (OTDRM) und einen optischen Koppler (OC) sowie einen zusätzlichen Empfänger (Rr), welcher für den Empfang von Niederfrequenzsignalen geeignet ist, umfasst, wobei der Sender (Tx) und der zusätzliche Empfänger an den optischen Koppler angeschlossen sind, wobei der separate Niederfrequenzempfänger fähig ist, einen Teil des Reflektionssignals zu empfangen, wobei das optische Zeitbereichsreflektometrie-Signal (Ts) ein Niederfrequenzsignal ist, wobei der Sender fähig ist, das optische Zeitbereichsreflektometrie-Signal bei Datenübertragungswellenlänge zu empfangen.

3. Ein faseroptisches Kommunikationsnetzwerkelement (NE), welches mindestens ein Transceiver-Modul (OTM) nach Anspruch 2 umfasst.

## Revendications

1. Procédé de surveillance de la performance de la liaison optique d'une pluralité de fibres optiques (OF1, OF2, OFn), chacune connectée à au moins un module émetteur-récepteur (OTM1, OTM2, OTMn) comprenant un émetteur (Tx) et un récepteur (Rx), le procédé comprenant :
la génération et l'émission d'un signal de réflectométrie optique dans le domaine temporel (Ts) par l'intermédiaire desdites fibres optiques (OF1, OF2, OFn) et la réception et la surveillance d'un signal de réflexion (Rs') dudit signal émis, ledit signal de réflexion étant redirigé via un coupleur optique (OC) connecté au module émetteur-récepteur,
**caractérisé en ce que** des moyens de mesure de réflectométrie optique dans le domaine temporel (OTDR) pour la génération de signal et les mesures de surveillance sont couplés à l'émetteur et audit récepteur et sont situés dans chacun des modules émetteurs-récepteurs (OTM1, OTM2, OTMn) utilisés pour l'émission/la réception de données et le coupleur optique (OC) redirige une partie du signal de réflexion vers un récepteur basse fréquence séparé (Rr), dans lequel le récepteur basse fréquence séparé reçoit une partie du signal de réflexion, dans lequel le signal de réflectométrie optique dans le domaine temporel (Ts) est un signal basse fréquence, dans lequel l'émetteur émet ledit signal de réflectométrie optique dans le domaine temporel à la longueur d'ondes de la transmission de données.

2. Module émetteur-récepteur de communications par fibre optique (OTM) comprenant un émetteur (Tx) et un récepteur (Rx) pour l'émission et la réception de données, **caractérisé en ce qu'**il comprend en outre des moyens internes de mesure de réflectométrie optique dans le domaine temporel (OTDRM) et un coupleur optique (OC) et un récepteur supplémentaire (Rr) adapté pour recevoir des signaux basse fréquence, l'émetteur (Tx) et le récepteur supplémentaire étant connectés au coupleur optique, dans lequel le récepteur basse fréquence séparé est adapté pour recevoir une partie du signal de réflexion, dans lequel le signal de réflectométrie optique dans le domaine temporel (Ts) est un signal basse fréquence, dans lequel l'émetteur est adapté pour transmettre le signal de réflectométrie optique dans le domaine temporel à la longueur d'ondes de la transmission de données.

3. Elément de réseau de communications par fibre optique (NE) comprenant au moins un module émetteur-récepteur (OTM) selon la revendication 2.
